# DEMANDE DE BREVET EUROPEEN

(11) **EP 0 671 539 A1**
(43) Date de publication de la demande: **13.09.1995**
(21) Numéro de dépôt: 95400451.1
(22) Date de dépôt: 02.03.1995
(51) Int. Cl.: E06B 9/40, E06B 9/325, E06B 9/66, B60J 1/20

(54) **Dispositif de maintien d'un store dans son état déployé**

(30) Priorité: 07.03.1994 FR 9402589
(71) Demandeur: FARNIER & PENIN SNC, F-79300 Bressuire (FR)
(72) Inventeur: Jincheleau, Michel, F-79320 Moncoutant (FR)
(74) Mandataire: Robert, Jean-Pierre

(57) **Abrégé**

Le store (1) comporte un boîtier (4) fixé à un bord d'une baie à occulter (2) et contenant des moyens d'enroulement d'une toile (5) dont l'extrémité libre est équipée d'une barre de tirage (6) portant deux organes d'accrochage (8a, 8b; 20a, 20b), tandis que deux organes d'accrochage fixes (9a, 9b ; 22a, 22b) correspondants sont fixés à un autre bord de la baie à occulter (2). Selon l'invention, pour chaque couple d'organes d'accrochage correspondants, l'un d'eux présente une arête d'appui (10a, 10b ; 21a, 21b) pour l'autre, s'opposant au reploiement de la toile (5), cette arête s'étendant dans un plan sensiblement parallèle au plan contenant la toile (5) déployée de façon inclinée par rapport à l'axe d'enroulement (7) et de manière à converger avec l'arête de l'organe d'accrochage de l'autre couple d'organe d'accrochage correspondants.

## Description

La présente invention concerne un dispositif de maintien d'un store dans son état déployé.

Un store, notamment pour véhicule automobile, comporte un boîtier fixé à une structure voisine d'un bord d'une baie à occulter et contenant un dispositif d'enroulement d'une toile dont l'extrémité libre est équipée d'une barre de tirage s'étendant transversalement à la direction de déroulement-enroulement de la toile. Le dispositif d'enroulement est sollicité par un couple permanent s'opposant au déploiement de la toile et tendant à bloquer la barre de tirage contre le boîtier. Le maintien du store dans son état déployé contre le couple d'enroulement est assuré par des moyens d'accrochage de la barre de tirage à un élément de structure voisin d'un autre bord de la baie à occulter. Une partie de ces moyens d'accrochage est solidaire de la barre de tirage tandis que l'autre partie est fixée à la structure.

Les tolérances de positionnement de la partie fixée à la structure peuvent engendrer un décalage de la barre de tirage par rapport à l'axe d'enroulement de la toile dans le boîtier, ce qui provoque des marques de tension de la toile.

La présente invention entend remédier à cet inconvénient en proposant un dispositif de maintien d'un store dans son état déployé assurant un réglage automatique de la position de la barre de tirage par rapport à l'axe d'enroulement de la toile afin d'uniformiser la tension de cette toile.

En vue de la réalisation de ce but, on prévoit un dispositif de maintien dans son état déployé d'un store comportant un boîtier qui est fixé à un élément de structure voisin d'un bord d'une baie à occulter et contient des moyens d'enroulement autour d'un axe d'une toile dont l'extrémité libre est équipée d'une barre de tirage s'étendant transversalement à la direction de déroulement-enroulement de la toile, le dispositif de maintien comportant deux organes d'accrochage, solidaires de la barre de tirage et disposés au voisinage de chacune des extrémités de cette barre, et deux organes d'accrochage fixes correspondants portés par un élément de structure voisin d'un autre bord de la baie à occulter.

Selon l'invention, pour chaque couple d'organes d'accrochage correspondants, l'un d'eux présente une arête d'appui pour l'autre, s'opposant au reploiement de la toile et s'étendant dans un plan sensiblement parallèle au plan contenant la toile déployée, cette arête étant inclinée par rapport à la barre de tirage de manière à converger avec l'arête de l'organe d'accrochage de l'autre couple d'organes d'accrochage correspondants.

Ainsi, lorsque les organes d'accrochage correspondants sont en prise et retiennent la toile dans son état déployé, il peut se produire un glissement des organes d'accrochage portés par la barre par rapport aux organes d'accrochage fixes sur les deux arêtes d'appui inclinées de manière convergente, ce glissement tendant à placer la barre parallèlement à l'axe d'enroulement et à la maintenir dans cette position. La toile est alors uniformément déployée et il n'existe plus de marques, ondulations ou plis sur celle-ci qui nuisent à son aspect esthétique.

Selon un premier mode de réalisation de l'invention, pour chaque couple d'organes d'accrochage correspondants, un des organes d'accrochage est constitué par une attache comportant une gouttière dont le fond porte l'arête d'appui, et l'autre organe d'accrochage est constitué par un doigt en forme de crochet ayant une extrémité terminale arrondie logée dans la gouttière pour prendre appui sur son fond.

Selon un second mode de réalisation de l'invention, pour chaque couple d'organes d'accrochage correspondants, un des organes d'accrochage est constitué par une plaque d'accrochage pourvue d'une ouverture dont une partie du bord porte l'arête d'appui, et l'autre organe d'accrochage est constitué par un doigt qui s'appuie par sa surface extérieure sur l'arête d'appui.

Indifférement les arêtes d'appui peuvent être portée par les organes d'accrochage fixes, solidaires de la structure, ou les organes d'accrochage portés par la barre de tirage.

D'autres caractéristiques et avantages de l'invention apparaîtront à la lecture de la description qui suit de modes de réalisation particuliers et non limitatifs de l'invention. Il sera fait référence aux figures en annexe, parmi lesquelles :
- la figure 1 est une vue schématique en élévation d'un store maintenu déployé devant une baie au moyen du dispositif de maintien selon l'invention illustrant un premier mode de réalisation ;
- la figure 2 est une vue en perspective illustrant une variante du dispositif de la figure 1 ;
- la figure 3 est une vue en coupe transversale du dispositif de la figure 2 ;
- la figure 4 est une vue analogue à la figure 1 illustrant un second mode de réalisation de l'invention ;
- la figure 5 est une vue en perspective illustrant une variante du dispositif de la figure 4 ;
- la figure 6 est une vue en coupe transversale du dispositif de la figure 5 ;
- la figure 7 est une vue partielle en perspective illustrant une seconde variante du dispositif de la figure 1;
- la figure 8 est une vue analogue à la figure 7 illustrant une seconde variante du dispositif de la figure 4.

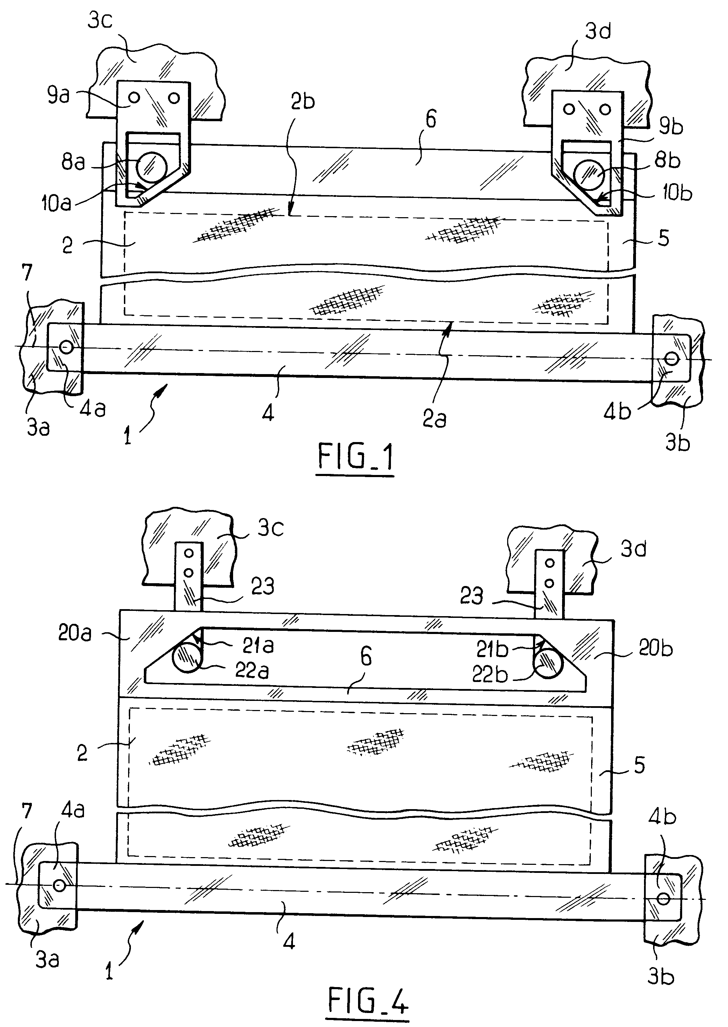

Aux figures 1 à 6, on a représenté schématiquement un store 1 maintenu dans son état déployé par un dispositif de maintien selon l'invention devant une baie 2, qui est ainsi occultée. Le store 1 comporte un boîtier 4 accroché par des pattes 4a et 4b à des éléments de structure 3a et 3b au voisinage d'un bord 2a de la baie occultée 2 et contenant des moyens d'enroulement (non représentés) autour d'un axe 7 d'une toile 5 dont l'extrémité libre est équipée d'une barre de tirage 6 s'étendant transversalement à la direction de déroulement-enroulement de la toile 5, c'est-à-dire parallèlement à l'axe d'enroulement 7.

A la figure 1, on a représenté schématiquement un premier mode de réalisation du dispositif de maintien selon l'invention. Le dispositif comporte deux organes d'accrochage 8a et 8b identiques, solidaires de la barre de tirage 6 et disposés au voisinage de chacune des extrémités de cette barre, et deux organes d'accrochage fixes 9a et 9b portés respectivement par des éléments de structure 3c et 3d situés à proximité d'un bord 2b de la baie occultée 2 éloigné du boîtier 4. Chaque organe d'accrochage fixe 9a et 9b coopère avec un des organes d'accrochage mobiles 8a et 8b pour s'opposer au reploiement de la toile 5.

Les organes d'accrochage fixes sont constitués par des attaches 9a et 9b fixées aux éléments de structure 3c et 3d et présentant respectivement des arêtes d'appui 10a et 10b qui s'étendent dans un plan sensiblement parallèle au plan contenant la toile 5 déployée en étant inclinées par rapport à l'axe d'enroulement 7 de manière à converger l'une avec l'autre. Les organes d'accrochage mobiles 8a et 8b sont constitués par des doigts qui s'appuyent par leur surface latérale sur l'arête d'appui 10a ou 10b de l'organe d'accrochage fixe correspondant.

Lorsque le store 1 est déployé à l'encontre des moyens d'enroulement de la toile, les doigts sont introduits dans les attaches 9a et 9b. Au moment où la barre de tirage 6 est relâchée, la tension exercée par la toile 5 sur la barre de tirage 6 peut ne pas être uniforme le long de cette barre, du fait des incertitudes de montage des organes d'accrochage fixes qui provoquent un mauvais alignement de la barre de tirage 6 par rapport à l'axe d'enroulement 7 de la toile 5. Dans ce cas, les efforts exercés par chacune des attaches sur chacun des doigts selon la direction de reploiement de la toile 5 sont inégaux. Or, les actions des attaches 9a et 9b sur les doigts 8a et 8b s'exercent perpendiculairement aux arêtes d'appui 10a et 10b. Comme ces arêtes sont inclinées, il s'ensuit que ces actions comportent également une composante parallèle à l'axe d'enroulement 7. Donc le déséquilibre des efforts exercés suivant la direction de reploiement de la toile sur chaque doigt 8a et 8b engendre aussi un déséquilibre des efforts exercés par les attaches 9a et 9b sur les doigts 8a et 8b parallèlement à l'axe d'enroulement 7 et en sens opposés. Ce déséquilibre engendre un déplacement longitudinal de la barre de tirage 6 et, du fait de l'inclinaison des arêtes d'appuis 10a et 10b, un déplacement transversal dans des sens opposés de chacun des doigts 8a et 8b, c'est-à-dire un pivotement de la barre de tirage 6 dans le plan de la toile 5. La barre de tirage 6 s'immobilise lorsque son positionnement correspond à une tension uniforme de la toile 5.

Cette uniformité de tension de la toile 5, obtenue automatiquement grâce aux inclinaisons opposées des arêtes d'appui 10a et 10b du dispositif de maintien selon l'invention, permet d'éliminer les plis couramment constatés dans les dispositifs existants du fait des incertitudes d'alignement de la barre de tirage.

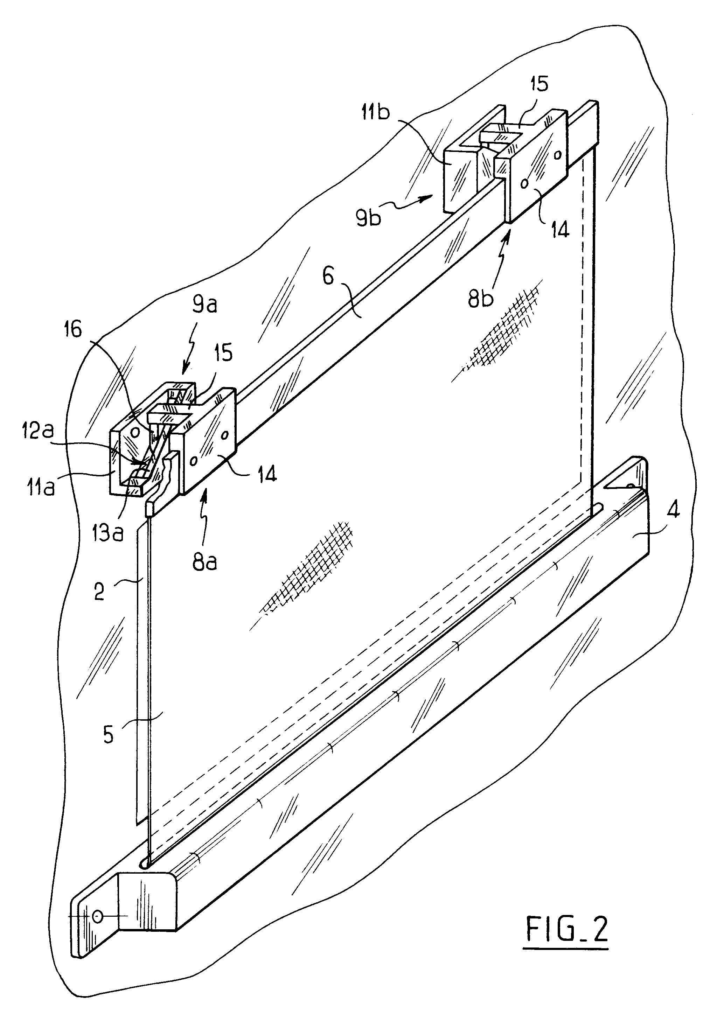

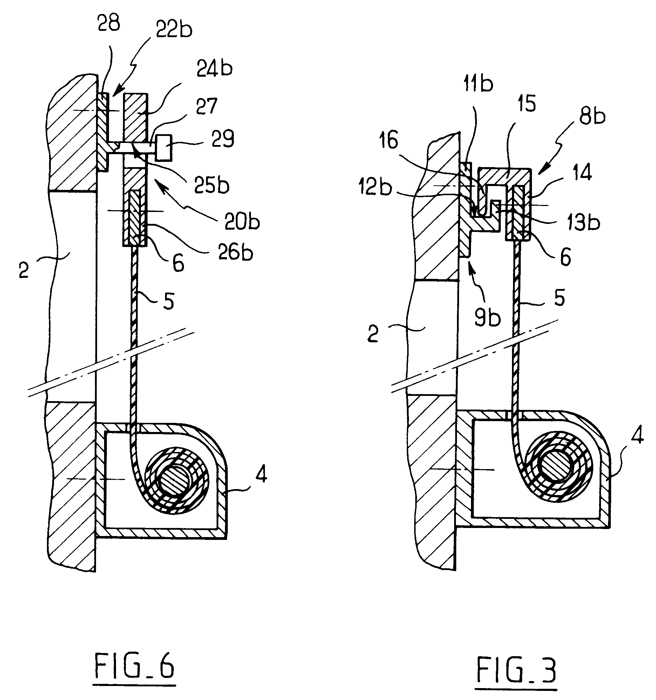

Selon une variante de ce mode de réalisation, illustrée par les figures 2 et 3, les attaches 9a et 9b comportent chacune respectivement une plaque de fixation lla, llb et une gouttière 12a, 12b solidaire de cette plaque. Cette gouttière comporte un fond plat qui porte une arête d'appui pour chacun des organes d'accrochage mobiles 8a et 8b. Ces fonds plats s'étendent, de manière à converger l'un vers l'autre, dans des plans perpendiculaires au plan contenant la toile 5 et inclinés par rapport à un plan qui est perpendiculaire au plan de la toile et parallèle à l'axe d'enroulement 7. Les gouttières 12a et 12b comportent respectivement, de part et d'autre de leurs fonds, un premier rebord constitué par les plaques de fixation 11a, 11b et un second rebord constitué par des bordures 13a, 13b.

Les organes d'accrochage mobiles 8a et 8b comportent chacun une patte de fixation 14 rapportée sur la barre de tirage 6, un bras 15 et un doigt 16 fixé à l'extrémité libre du bras 15 en s'étendant dans la direction de reploiement de la toile 5 pour former un crochet. Ce doigt est muni d'une extrémité terminale sphérique destinée à glisser en appui sur le fond plat de la gouttière 12a ou 12b de l'attache 9a ou 9b correspondante. Les bordures 13a, 13b des gouttières 12a, 12b permettent d'empêcher les doigts 16 de sortir de ces gouttières et d'éviter ainsi le désengagement de l'accouplement des organes d'accrochage.

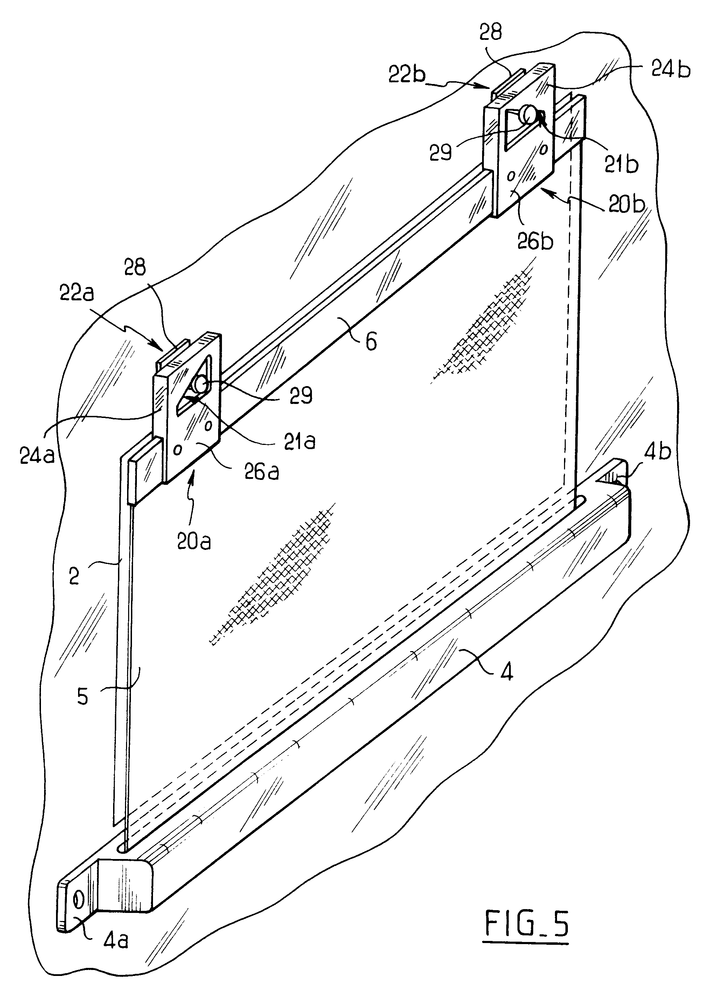

A la figure 4, on a représenté, de même que précédemment, un store 1 dans son état déployé, équipé d'un dispositif de maintien dans son état déployé selon un second mode de réalisation de l'invention. La barre de tirage 6 est ici équipée d'organes d'accrochage 20a et 20b munis d'arêtes d'appui 21a et 21b coopérant avec des organes d'accrochage fixes 22a et 22b identiques, solidaires des éléments de structure 3c et 3d et s'opposant au reploiement de la barre de tirage 6. Ces organes d'accrochage fixes sont constitués par des doigts 22a et 22b munis de pattes d'accrochage 23 respectivement fixées aux éléments de structure 3c et 3d et s'appuyant sur les arêtes d'appui 21a et 21b des organes d'accrochage mobiles 20a et 20b correspondants.

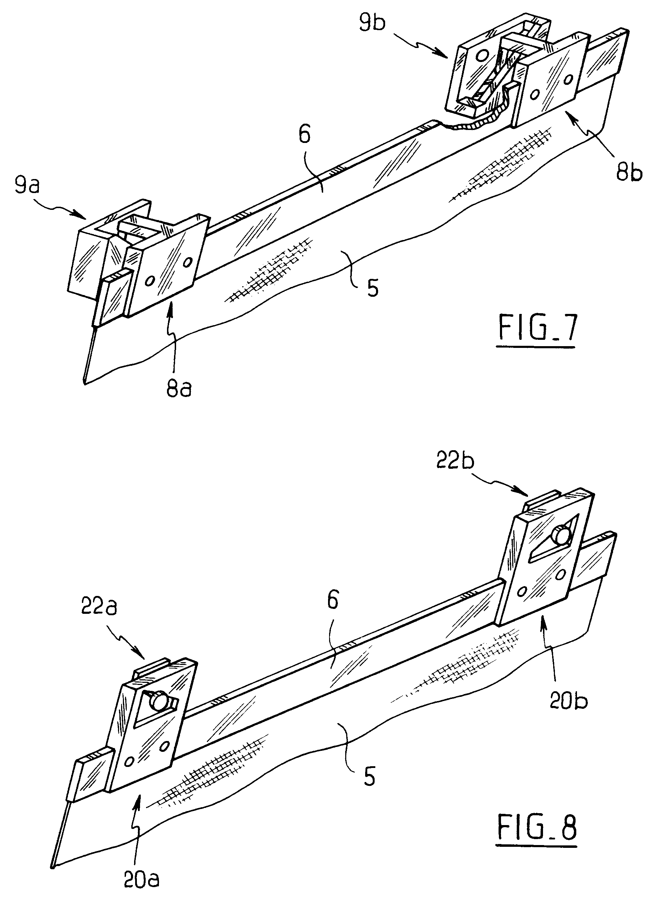

Selon une variante de réalisation de ce second mode illustrée par les figures 5 et 6, les organes d'accrochage mobiles sont tous deux constitués par des attaches 20a et 20b. Chaque attache comporte une patte de fixation 26a, 26b rapportée sur la barre de tirage 6, une plaque d'accrochage 24a, 24b pourvue d'une ouverture dont une partie porte l'arête d'appui 21a, 21b pour chacun des organes d'accrochage fixes 22a et 22b. Les organes d'accrochage fixes 22a et 22b comportent une plaque de fixation 28 accrochée aux éléments de structure et un doigt 27 s'étendant perpendiculairement au plan de la toile 5 et s'appuyant par sa surface latérale sur l'arête d'appui de l'attache 20a ou 20b correspondante. Le doigt 27 comporte à son extrémité terminale une tête 29 de butée au glissement des attaches 20a, 20b le long de ce doigt, cette butée permettant d'éviter le désengagement de l'accouplement des organes d'accrochage.

L'invention n'est pas limitée aux modes de réalisation particuliers qui viennent d'être décrits, mais englobe toute variante reprenant, avec des moyens équivalents, les caractéristiques énoncées plus haut. Par exemple, même si les arêtes d'appui ont été représentées aux figures 1 à 6 pour converger à l'opposé du boîtier, il est possible d'inverser les inclinaisons de ces arêtes, comme illustré par les figures 7 et 8, pour qu'elles convergent en direction du boîtier.

## Revendications

1. Dispositif de maintien dans son état déployé d'un store (1) comportant un boîtier (4) qui est accroché à un élément de structure (3a, 3b) voisin d'un bord (2a) d'une baie à occulter (2) et contient des moyens d'enroulement autour d'un axe (7) d'une toile (5) dont l'extrémité libre est équipée d'une barre de tirage (6) s'étendant transversalement à la direction de déroulement-enroulement de la toile (5), le dispositif de maintien comportant deux organes d'accrochage (8a, 8b ; 20a, 20b) solidaires de la barre de tirage (6) et disposés au voisinage de chacune des extrémités de cette barre, et deux organes d'accrochage fixes (9a, 9b ; 22a, 22b) correspondants portés par un élément de structure (3c, 3d) voisin d'un autre bord (2b) de la baie à occulter (2), caractérisé en ce que, pour chaque couple d'organes d'accrochage correspondants, l'un d'eux présente une arête d'appui (10a, 10b ; 21a, 21b) pour l'autre, s'opposant au reploiement de la toile (5) et s'étendant dans un plan sensiblement parallèle au plan contenant la toile (5) déployée, cette arête étant inclinée par rapport à l'axe d'enroulement (7) de manière à converger avec l'arête de l'organe d'accrochage de l'autre couple d'organes d'accrochage correspondants.

2. Dispositif de maintien selon la revendication 1, caractérisé en ce que, pour chaque couple d'organes d'accrochage correspondants, un des organes d'accrochage est constitué par une attache (9a, 9b) comportant une gouttière (12a, 12b) dont le fond porte l'arête d'appui, et l'autre organe d'accrochage est constitué par un crochet (8a, 8b) muni d'un doigt (16) ayant une extrémité terminale arrondie logée dans la gouttière (12a, 12b) pour prendre appui sur son fond.

3. Dispositif de maintien selon la revendication 2, caractérisé en ce que les attaches (9a, 9b) sont portées par les éléments de structure et en ce que les crochets (8a, 8b) sont portés par la barre de tirage (6).

4. Dispositif de maintien selon la revendication 1, caractérisé en ce que, pour chaque couple d'organes d'accrochage correspondants, un des organes d'accrochage est constitué par une attache (20a, 20b) pourvue d'une ouverture dont une partie du bord porte l'arête d'appui (21a, 21b), et l'autre organe d'accrochage est constitué par un doigt (27) qui s'appuie par sa surface extérieure sur l'arête d'appui (21a, 21b).

5. Dispositif de maintien selon la revendication 4, caractérisé en ce que les attaches (20a, 20b) sont portées par la barre de tirage (6) et en ce que les doigts (27) sont portés par les éléments de structure.
